# EUROPÄISCHE PATENTANMELDUNG

(11) **EP 1 944 990 A1**
(43) Veröffentlichungstag der Anmeldung: **16.07.2008**
(21) Anmeldenummer: 07022164.3
(22) Anmeldetag: 15.11.2007
(51) Int. Cl.: H04Q 7/38

(54) **Vermittlung von Rufen aus einem prioritäts-basierenden Telekommunikationsnetzwerk in ein nicht prioritäts-basierendes Telekommunikationsnetzwerk**

(30) Priorität: 09.01.2007 DE 102007002069
(71) Anmelder: DB Systel GmbH, 60326 Frankfurt am Main (DE)
(72) Erfinder: Krämer, Stefan, 60385 Frankfurt am Main (DE)
(74) Vertreter: Zinken-Sommer, Rainer

(57) **Zusammenfassung**

Die Erfindung betrifft ein Verfahren zur Vermittlung von Rufen zwischen den Netzübergangsvermittlungsstellen zweier Telekommunikationsnetze, wobei ein erstes dieser beiden Telekommunikationsnetze über Funktionalitäten zur Priorisierung und prioritätsabhängigen Verdrängung von Rufen verfügt sowie im zweiten dieser beiden Telekommunikationsnetze keine Funktionalität zur Priorisierung und prioritätsabhängigen Verdrängung von Rufen vorhanden ist.

Hierzu ist vorgesehen, dass beim Verbindungsaufbau zwischen einem aus dem ersten Telekommunikationsnetz (A) mit einer Priorität (P_{A}) rufenden Teilnehmer (T_{A}) und einem im zweiten Telekommunikationsnetz (B) gerufenen Teilnehmer (T_{B}) von der Netzübergangsvermittlungsstelle (N_{A}) des ersten Netzes ein Datenelement (P_{B}), das den gerufenen Teilnehmer (T_{B}) als Teilnehmer eines mit Funktionalitäten zur Priorisierung und prioritätsabhängigen Verdrängung ausgestatteten Netzes kennzeichnet, in eine von dieser Netzübergangsvermittlungsstelle (N_{A}) gesendete Rückwärts-Nachricht geschrieben wird. Auf diese Weise kann eine Blockade eines MLPP-fähigen Netzes wirksam verhindert werden.

## Beschreibung

Die Erfindung betrifft ein Verfahren zur Vermittlung von Rufen zwischen den Netzübergangsvermittlungsstellen zweier Telekommunikationsnetze, wobei ein erstes dieser beiden Telekommunikationsnetze über Funktionalitäten zur Priorisierung und prioritätsabhängigen Verdrängung von Rufen verfügt sowie im zweiten dieser beiden Telekommunikationsnetze keine Funktionalität zur Priorisierung und prioritätsabhängigen Verdrängung von Rufen vorhanden ist.

Die Vermittlung von Rufen zwischen Telekommunikationsnetzen unterschiedlicher technischer Standards gehört seit geraumer Zeit zu den gängigen Anforderungen an ein modernes und leistungsfähiges Telekommunikationssystem. Dies trifft insbesondere auf die Vermittlung zwischen Mobilfunknetzen und Festnetzen zu.

Im Gegensatz zu vielen nach meist älteren Standards spezifizierten Festnetzen sehen einige Mobilfunknetze Funktionalitäten zur Priorisierung von Rufen sowie zur prioritätsabhängigen Verdrängung derartiger Rufe vor. So ist es beispielsweise in einem nach dem GSM-R-Standard (hierbei handelt es sich um ein volldigitales Mobilfunknetz, welches auf dem GSM (="Global System for Mobile Communications")-Standard aufbaut und speziell für die Bedürfnisse bei der Betriebsabwicklung des Eisenbahnverkehrs weiterentwickelt wurde) spezifizierten Mobilfunknetz vorgesehen, dass Notrufe mit einer höheren Priorität versehen werden und somit auch bei hoher Nutzungslast durch das Verdrängen niedriger priorisierter Rufe zuverlässig an den Empfänger durchgestellt werden können. Diese Funktionalität wird mit Hilfe sogenannter "MLPP-Prioritätsparameter" realisiert, wobei MLPP für "Multi-Level Precedence (= Priorität) and Preemption (= Verdrängung) service" steht. Im Gegensatz hierzu ist in Mobilfunknetzen des herkömmlichen GSM-Standards keine Priorisierung vorgesehen, so dass auch keine bevorzugte Behandlung von Notrufen möglich ist.

Eine besondere Problematik erwächst jedoch aus der Rufübertragung zwischen MLPP-fähigen Telekommunikationsnetzen und solchen Netzen, die nicht über MLPP-Fähigkeiten verfügen (sog. "nicht-MLPP-fähige Netze").

Für Rufe, die ausgehend von einem nicht-MLPP-fähigen Netz an ein MLPPfähiges Netz gesendet werden, ist es nach der Spezifikation TS 03.67 (Version 7.2.0, Release 1998) der ETSI (= "European Telecommunications Standards Institute") vorgesehen, dass diese Rufe in dem empfangenden MLPP-fähigen Netz mit einer Standard-Priorität behandelt werden. Damit soll verhindert werden, dass derartige nicht-priorisierte Rufe die prioritätsabhängige Verdrängungssystematik für hoch-priorisierte Rufe (z.B. Notrufe) außer Kraft setzen bzw. blockieren.

Nach diesem bekannten Stand der Technik gibt es jedoch keine Lösung für Rufe, die in umgekehrter Richtung aus einem MLPP-fähigen Netz in ein nicht-MLPPfähiges Netz übertragen werden. Falls ein Teilnehmer aus dem MLPP-fähigen Netz mittels eines solchen Rufes, dem eine definierte Priorität zugeordnet ist, einen Teilnehmer in einem nicht-MLPP-fähigen Netz ruft, so wird auf allen Schnittstellen der am Verbindungsaufbau beteiligten Vermittlungsstelle bzw. Mobilfunkvermittlungsstelle (MSC; "Mobile Switching Center") des MLPP-fähigen Netzes diese definierte Priorität übertragen und den Kanälen zwischen den Vermittlungsstellen der Netze A und B zugeordnet.

Da aber das gerufene nicht-MLPP-fähige Netz eine Priorisierung nicht unterstützt, wird dies in Rückwärtsrichtung signalisiert und im MLPP-fähigen Netz wird die Priorität auf den Kanälen zwischen den Vermittlungsstellen wieder aufgehoben. Den belegten Kanälen ist somit keine Priorität zugeordnet; die Mechanismen zur prioritätsabhängigen Verdrängung sind damit nicht mehr wirksam. Dies könnte also dazu führen, dass ein derartiger Ruf einen Notruf im MLPP-fähigen Netz blockiert.

Der Erfindung liegt daher die Aufgabe zugrunde, ein Verfahren zur Vermittlung von Rufen zwischen den Netzübergangsvermittlungsstellen zweier Telekommunikationsnetze, wobei ein erstes Telekommunikationsnetz dieser beiden Telekommunikationsnetze über Funktionalitäten zur Priorisierung und prioritätsabhängigen Verdrängung der in diesem ersten Netz generierten Rufe verfügt sowie im zweiten Telekommunikationsnetz dieser beiden Telekommunikationsnetze keine Funktionalität zur Priorisierung und prioritätsabhängigen Verdrängung der in diesem zweiten Netz generierten Rufe vorhanden ist, bereitzustellen, welches verhindert, dass Rufe vom ersten in das zweite Telekommunikationsnetz die hoch-priorisierten Rufe des ersten Netzes (z.B. Notrufe) blockieren.

Erfindungsgemäß wird diese Aufgabe in Verbindung mit dem Oberbegriff des Patentanspruches 1 dadurch gelöst, dass beim Verbindungsaufbau zwischen einem aus dem ersten Telekommunikationsnetz mit einer Priorität rufenden Teilnehmer und einem im zweiten Telekommunikationsnetz gerufenen Teilnehmer von der Netzübergangsvermittlungsstelle des ersten Netzes ein Datenelement, das den gerufenen Teilnehmer als Teilnehmer eines mit Funktionalitäten zur Priorisierung und prioritätsabhängigen Verdrängung ausgestatteten Netzes kennzeichnet, in eine von dieser Netzübergangsvermittlungsstelle gesendete Rückwärts-Nachricht geschrieben wird.

In Abhängigkeit des zwischen den beiden Vermittlungsstellen zur Anwendung kommenden Übertragungsprotokolls kann es sich bei dieser ersten Rückwärts-Nachricht um verschiedenartige Nachrichten handeln. Bei Anwendung des Protokolls vom Typ ISUP (="ISDN User Part") kann es sich z.B. um Nachrichten vom Typ ACM (= "Adress Complete Message"), CPG (= "Call Progress"), ANM (= "Answer Message") oder CON (= "Connect") handeln. Die Vermittlungsstelle des MLPP-fähigen ersten Netzes wird erfindungsgemäß jeweils so konfiguriert, dass durch Setzen eines Datenelementes in der ersten protokoll-konformen Nachricht in Rückwärts-Richtung der gerufene Teilnehmer als MLPP-fähiger Teilnehmer ausgewiesen wird.

Auf diese Weise kann eine Überprüfung am Netzeingang des MLPP-fähigen Netzes implementiert werden, um die Funktionsfähigkeit dieses Netzes zu schützen. Eine Blockade des MLPP-fähigen Netzes wird wirksam verhindert.

Der Erfindungsgedanke wird in nachfolgender Figur verdeutlicht. Es zeigt:

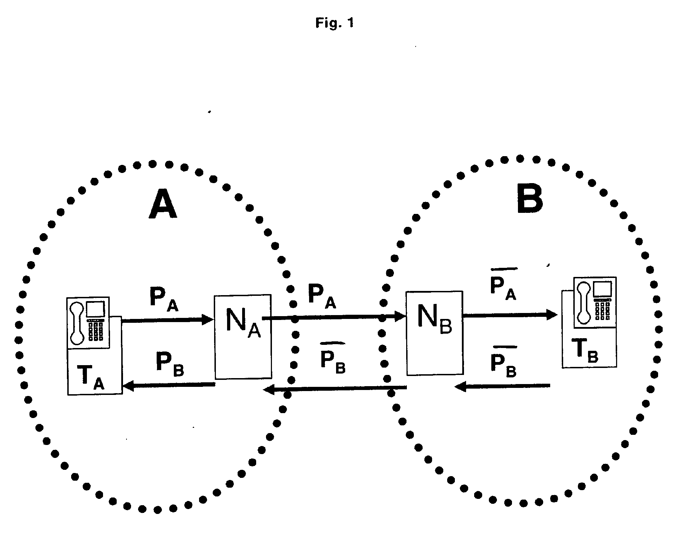

- Figur 1: Prinzip-Schemabild des erfindungsgemäßen Verfahrens

Ein Mobilfunkteilnehmer (T_{A}) eines nach dem GSM-R-Standard ausgeführten Mobilfunknetzes (A) wählt einen Mobilfunkteilnehmer (T_{B}) an, der in einem herkömmlichen öffentlichen GSM-Mobilfunknetz (B) registriert ist. Dieses GSM-Netz ist gemäß der zugrundeliegenden Spezifikationen nicht MLPP-fähig; d.h. die in diesem Netz übertragenen Rufe weisen keine Parameter auf, die die Priorität des Rufes charakterisieren könnten. Demzufolge können die Ressourcen dieses GSM-Netzes auch nicht in Abhängigkeit von einer solchen Priorisierung den verschiedenen Rufanforderungen zugewiesen werden. Mittels eines eher belanglosen "Dauer-Telefonates" kann der Teilnehmer eines solchen Netzes also beispielsweise die Annahme und damit das Zustandekommens eines an ihn adressierten wichtigeren Rufes blockieren bzw. verhindern. Derartige "wichtigere" Rufe könnten beispielsweise von Behörden oder Institutionen des Katastrophenschutzes, Polizei- oder Rettungswesens ausgelöst werden.

Beide Mobilfunknetze (A, B) sind mittels Mobilfunkvermittlungsstellen (MSC) (N_{A}, N_{B}) miteinander verbunden.

Der vom Teilnehmer T_{A} ausgelösten Rufaufbaunachricht wird eine Priorität zugeordnet, wobei die Regeln für das Vergeben und Zuteilen von Prioritäten nicht Gegenstand dieser Erfindung sind; das Datenelement P_{A} wird mit einem Wert belegt. Diese Priorität wird im Zuge der Vorwärts-Signalisierung (vom Netz A zum Netz B) auf alle Kanäle zwischen den beiden Mobilfunkvermittlungsstellen und damit auch auf die eingangsseitigen Schnittstellen der Mobilfunkvermittlungsstelle N_{B} übertragen. Da aber das Netz B nicht MLPP-fähig ist, enthalten die im Zuge der Rückwärtssignalisierung vom Netz B an das Netz A übertragenen Nachrichten kein

Prioritätsmerkmal mehr (P̅_̅{̅B̅}̅ auf der Inter-MSC-Schnittstelle zwischen N_{B} und N_{A}).

Die im Zuge dieser Rückwärtssignalisierung belegten Kanäle wären somit im Netz A mangels Prioritätsmerkmal nicht mehr verdrängbar. Stattdessen wird jedoch erfindungsgemäß von der Mobilfunkvermittlungsstelle (N_{A}) des MLPP-fähigen GSM-R-Netzes (A) in die erste gemäß des zwischen beiden Vermittlungsstellen zur Anwendung kommenden ISUP-Protokolls in Rückwärtsrichtung gesendete Nachricht ein Datenelement (P_{B}) mit dem Wert "MLPP-User" eingetragen. Dadurch wird der Ruf im GSM-R-Netz (A) durch Rufe mit höheren Prioritäten verdrängbar.

### Bezugszeichenliste:

- A: Telekommunikationsnetz mit Funktionalitäten zur Priorisierung und prioritätsabhängigen Verdrängung von Rufen, z.B. GSM-R-Netz
- B: Telekommunikationsnetz ohne Funktionalitäten zur Priorisierung und prioritätsabhängigen Verdrängung von Rufen, z.B. GSM-Netz
- T_{A}: aus dem Netz A rufender Teilnehmer
- T_{B}: im Netz B gerufener Teilnehmer
- P_{A}: Datenelement zur Kennzeichnung der Priorität des Rufes von A nach B
- P_{B}: Datenelement zur Kennzeichnung, ob Teilnehmer T_{B} eine Priorisierung unterstützt
- *P̅_̅{̅A̅}̅*: Negierung bzw. Nicht-Belegung des Datenelementes P_{A}
- *P̅_̅{̅B̅}̅*: Negierung bzw. Nicht-Belegung des Datenelementes P_{B}
- N_{A}: Netzübergangsvermittlungsstelle des Netzes A
- N_{B}: Netzübergangsvermittlungsstelle des Netzes B

## Patentansprüche

1. Verfahren zur Vermittlung von Rufen zwischen Netzübergangsvermittlungsstellen zweier Telekommunikationsnetze (A, B), wobei ein erstes Telekommunikationsnetz (A) dieser beiden Telekommunikationsnetze über Funktionalitäten zur Priorisierung und prioritätsabhängigen Verdrängung von Rufen verfügt sowie im zweiten Telekommunikationsnetz (B) dieser beiden Telekommunikationsnetze keine Funktionalität zur Priorisierung und prioritätsabhängigen Verdrängung von Rufen vorhanden ist,
**dadurch gekennzeichnet, dass**
beim Verbindungsaufbau zwischen einem aus dem ersten Telekommunikationsnetz (A) mit einer Priorität (P_{A}) rufenden Teilnehmer (T_{A}) und einem im zweiten Telekommunikationsnetz (B) gerufenen Teilnehmer (T_{B}) von der Netzübergangsvermittlungsstelle (N_{A}) des ersten Netzes ein Datenelement (P_{B}), das den gerufenen Teilnehmer (T_{B}) als Teilnehmer eines mit Funktionalitäten zur Priorisierung und prioritätsabhängigen Verdrängung ausgestatteten Netzes kennzeichnet, in eine von dieser Netzübergangsvermittlungsstelle (N_{A}) gesendete Rückwärts-Nachricht geschrieben wird.
